# EUROPEAN PATENT APPLICATION

(11) **EP 1 248 412 A2**
(43) Date of publication of application: **09.10.2002**
(21) Application number: 02007642.8
(22) Date of filing: 04.04.2002
(51) Int. Cl.: H04L 12/28

(54) **Communications system and method for providing wireless signals to a group of mobile subscribers**

(30) Priority: 04.04.2001 US 826189
(71) Applicant: Unique Broadband Systems, Inc., Concord, Ontario L4K 3Y3 (CA)
(72) Inventor: Dolgonos, Alex, Thornhill, Ontario, L4J 1C1 (CA); Smith, Gregory, Toronto, ontario, M6S 4K6 (CA)
(74) Representative: Chalk, Anthony John

(57) **Abstract**

A bi-directional point to multipoint communications system (10) using a wired/wireless communications link for high speed mobile data transfer. A cable television plant (14) is used in the wired portion (17) of the communications link. Antenna nodes (16) connected throughout the cable television plant (14) convert downlink signals from the cable television plant into a format (such as COFDM signals) suitable for transmission over a wireless link to mobile subscriber units (20).

## Description

### BACKGROUND OF THE INVENTION

The present invention relates to mobile data communications in which the communications path includes a wired portion in the form of a cable TV plant and an over-the-air wireless portion.

There have been a number of past proposals to use existing cable television (CATV) infrastructure as part of networks for mobile telephone communications. Such proposals recognize that existing cable TV networks provide wired communications paths to many locations within a geographic area. A number of patents are directed towards use of the cable plant in personal communications networks (PCN), including, for example, U.S. Patent No. 5,918,154 issued June 29,1999 to A. Beasley. However, the communications industry has generally resisted allocating CATV infrastructure to PCN communications, and has opted instead to use such infrastructure to support fixed high speed Internet services. In the United States, CableLabs® administers the CableLabs Certified™ Cable Modems project, formerly known as DOCSIS™ (Data Over Cable Service Interface Specification), that defines interface requirements for cable modems involved in high-speed data distribution over cable television system networks. Many cable companies have adopted the DOCSIS standards to provide Internet services over existing cable plants. However, such services still require a wired connection to the subscriber's location, and accordingly do not provide for mobile Internet services. Furthermore, as wired cable TV plants typically service only residential neighborhoods, cable companies are often unable to provide Internet access services to premium customers (i.e., small and medium-sized businesses) located in non-residential areas. The cable/wireless transmission techniques suggested in previous PCN related solutions generally are insufficient to provide the high speed robust transfer of data required for broadband Internet access.

Thus, there is a need for a cost effective system and method for providing wireless high speed Internet and video services by using existing cable TV network infrastructure as part of the communications path.

### BRIEF SUMMARY OF THE INVENTION

The present invention is directed towards a point to multipoint communications system using a wired/wireless communications link for high speed mobile data transfer. A cable television plant is used in the wired portion of the communications link. Antenna nodes connected throughout the cable television plant convert downlink signals from the cable television plant into wireless multi-carrier modulated signals (such as COFDM signals) for transmission over a wireless link to mobile subscriber units.

According to one aspect of the present invention, there is provided a communications system for providing mobile wireless Internet signals to a group of subscribers. The communications system includes a distribution hub for receiving Internet signals for a plurality of subscribers from the Internet, and a plurality of video signals from a plurality of sources, and transmitting the Internet and video signals over a wired cable plant; a plurality of antenna nodes coupled to the distribution hub by the cable plant, each of the antenna nodes including a cable plant interface adapted to receive the Internet signals via the cable plant, and a multi-carrier modulator adapted to modulate the Internet signals onto multiple carriers for wireless transmission to the plurality of subscribers. Preferably the multi-carrier modulator includes an orthogonal frequency division multiplexer, the multi-carrier modulated Internet signals being orthogonal frequency division multiplexed (OFDM) signals. Conveniently, at least some of the antenna nodes may be configured to transmit substantially the same Internet signals at substantially the same time on substantially the same frequencies in overlapping coverage areas, thereby functioning as a single frequency network.

According to further aspect of the invention, there is provided a communications system for broadcasting television signals to a group of mobile subscribers. The system includes a distribution hub configured to receive television signals from a network and transmit the subscriber signals over a cable plant, and a cable plant connected to the distribution hub for transmitting the television signals from the distribution hub to a plurality of remote locations, the cable plant including at least one coaxial cable network. The system also includes a plurality of cable/wireless television transverters connected at remote locations to the coaxial cable network, the transverters being configured to receive television signals transmitted over the cable plant from the distribution hub, convert the television signals into a format suitable for wireless transmission, and transmit the converted television signals over wireless paths to a plurality of mobile subscribers units. A plurality of mobile subscriber units are configured to receive the converted television signals.

According to another aspect of the invention, there is provided a communications system for providing wireless signals from a network to a group of mobile subscribers, including a distribution hub for receiving, from the network, downstream IP signals for a plurality of mobile subscriber units located within a service area and broadcasting the downstream IP signals in a downstream channel over a wired cable TV plant. The distribution hub also receives, over the wired cable TV plant, from a plurality of antenna nodes, upstream IP signals and routes the upstream IP signals to the network. The communications system also includes a plurality of antenna nodes located in the service area and coupled to the distribution hub by the cable plant for receiving the downstream IP signals from the wired cable TV plant, converting the downstream IP signals into a format suitable for wireless transmission and transmitting the converted downstream IP signals over-the-air to the mobile subscriber units, at least some of the antenna nodes acting in simulcast manner. The distribution hubs (12) also receive upstream IP signals over-the-air from the mobile subscriber units, convert the upstream IP signals into a format suitable for transmission over the cable TV plant and transmit the upstream IP signals over the cable TV plant to the distribution hub. A plurality of mobile subscriber units each have a wireless receiver for receiving over-the-air downstream IP signals transmitted from the antenna nodes and a wireless transmitter for transmitting upstream IP signals to the antenna nodes.

According to still a further aspect of the invention, there is provided a method for transmitting wireless Internet signals to a group of mobile subscriber units, including (a) providing downstream Internet signals addressed for a plurality of subscribers units to a distribution hub; (b) formatting the Internet signals into a transmission format suitable for transmission over a wired cable television network and transmitting the formatted Internet signals over the cable television network to a plurality of antenna nodes connected throughout the wired cable television network; and (c) at the antenna nodes, converting the formatted Internet signals into multi-carrier modulated signals and transmitting the multi-carrier modulated signals over-the- air to the plurality of subscriber units.

### BRIEF DESCRIPTION OF THE DRAWINGS

Figure 1 is a block diagram of a hybrid cable/wireless communications system according to the present invention;
Figure 2 is a block diagram of the regional cable headend of the communications system;
Figure 3 is a block diagram of the distribution hub of the communications system;
Figure 4 is a block diagram of an antenna node of the communications system;
Figure 5 is a block diagram of a cable plant interface of the antenna node;
Figure 6 is a block diagram of an OFDM transceiver of the antenna node;
Figure 7 is a block diagram of a subscriber modem for use with the communications system; and
Figure 8 is a block diagram of a cable/wireless transverter, and a subscriber receiver, according to the present invention.

### DETAILED DESCRIPTION OF THE INVENTION

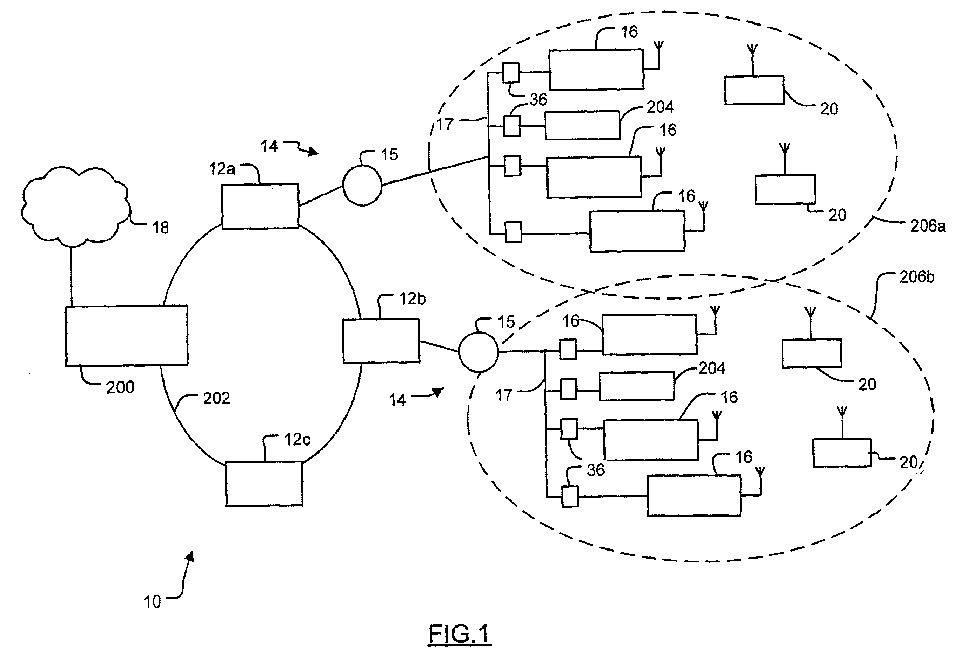

Figure 1 shows a hybrid cable/wireless communications system 10 in accordance with certain embodiments of the present invention. The communications system 10 combines wireless antenna nodes with existing cable infrastructure to provide mobile wireless Internet services and video distribution. In particular, in the illustrated embodiment the communications system 10 includes a conventional cable TV hierarchal redundant ring structure in which a regional cable headend 200 is connected by a fibre ring 202 to a number of distribution hubs 12a-c, which in turn are each connected by hybrid fibre/coaxial cable plants 14 to subscriber homes 204. As known in the art, the headend 200, fibre ring 202, distribution hubs 12a-c and cable plant 14 provide a communications link through which Internet ready devices, such as personal computers, located at subscriber homes 204 can communicate with the Internet 18. According to the present invention, a number of bi-directional antenna nodes 16 are connected at various locations to the various cable plants 17 to provide Internet service to wireless subscriber units 20. As will be explained in greater detail below, the communications system 10 allows transparent bi-directional transfer of Internet Protocol (IP) traffic, between the headend 200 and the subscriber units 20, over a combined wired/wireless communications path.

The communications system 10 provides wireless communications services to a geographic area that is broken up into smaller areas, each of which is served by a hub 12a-c. For exemplary purposes, the wireless service areas for hubs 12a and 12b are illustrated by dashed lines 206a and 206b, respectively. Depending on the particular wireless communications system 10, the geographic area may be divided into additional wireless service areas, or may include only a single wireless service area (in which case the hub may also serve as the headend). Although the wireless service areas 206a-b are illustrated as oval, different area shapes are possible. As will be explained below, each wireless service area 206a, 206b preferably corresponds to an area that can be provided with an acceptable Quality of Service (QoS) by a single downstream and a single upstream data channel. As such QoS is dependent upon the number of Internet subscribers within a given service area at any given time, in high subscription rate areas, the area served by a given distribution hub 12a-c may be broken into multiple wireless service areas, which may be partially or fully overlapping, or which may not overlap at all. In one preferred embodiment of the invention, each wireless service area 206a-b is preferably serviced by a group of antenna nodes 16 that act in a simulcast manner to provide downstream coverage in that wireless service area. However, in some configurations of the present invention, only a single antenna node 16 may be associated with a particular wireless service area.

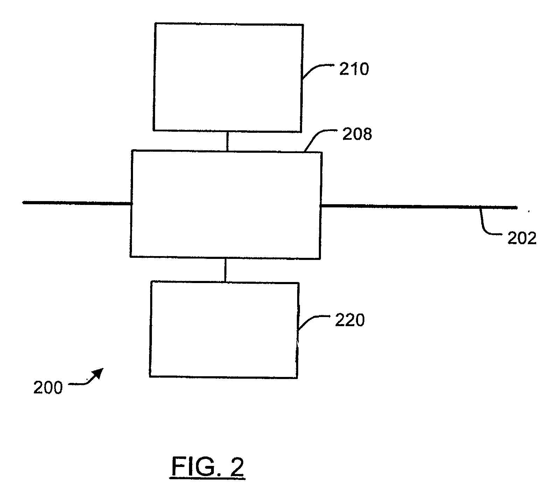

The regional cable headend 200 serves as a local data network operations centre and is the gateway between the communications system 10 and the Internet 18. With reference to Figure 2, the headend 200 includes a carrier-class IP switch or router 208 that interfaces with a backbone data network offering connectivity to the global Internet 18. The router 208 is connected to the distribution hubs 12a-c by fibre ring 202. The headend 200 also includes a network management system 210 which comprises the hardware and software necessary to run a cable data network, including for example servers for file transfer, user authorization and accounting, log control, IP address assignment and administration (Dynamic Host Configuration Protocol -DHCP), Domain Name Servers (DNS), and DOCSIS control. Additionally, the headend 200 may include local content and application servers 220, including for example e-mail, Web hosting, news, chat, proxy, caching, and streaming media servers. The headend 200 will also generally include conventional television network headend equipment (not shown).

The headend network management system 210 preferably uses Simple Network Management Protocol (SNMP) for managing the communications system 10. The network management system 210 maintains a list of all the addresses of the IP devices that make up and are served by the communications system 10, including information as to which subscriber IP devices are serviced by each hub 12a-12c. As in known data over cable networks, such address information is used by the IP router 208 to direct downstream data to the appropriate hub 12a-c so that the downstream data can then be routed to the appropriate subscriber address. With respect to stationary wired Internet subscriber devices located in subscriber homes 204, network management protocols for data over cable are well known in the art. With respect to mobile subscriber units 20, the network management system 210 is configured to dynamically associate each mobile subscriber unit with a particular hub 12a-c based on the location of the mobile subscriber unit 20. As will be explained in greater detail below, in one preferred embodiment of the invention, conventional cellular tracking methods (such as measuring received signal power) are used to track the location of mobile subscriber units 20 throughout the geographic coverage area of the communications system 10.

Conveniently, communications between the router 208 and the distribution hubs 12a-c may be carried out using high-capacity packet transport solutions, such as Packet Over SONET (POS). In a preferred embodiment of the present invention, communications between the distribution hubs 12a-c and their associated antenna nodes 16 are carried out using DOCSIS 1.1 compliant equipment and protocol. It will be appreciated that DOCSIS provides two options in physical layer technology. One technology option is based on the downstream multi-program distribution that is deployed in North America using 6MHz channeling generally in the region 50-750 MHz, and supports upstream transmission in the region 5-42 MHz. The other DOCSIS technology option is based on the corresponding European multi-program television distribution and supports upstream in the region 5-65 MHz. The present invention is described herein largely in the context of the DOCSIS 1.1 North American technology option, however it is not limited only to systems using such protocol. For example, another possible cable modem protocol is the DVB/DAVIC EuroModem protocol, and communications between the distribution hubs12a-c and their associated antenna nodes 16 could alternatively be based on such protocol, or on European DOCSIS.

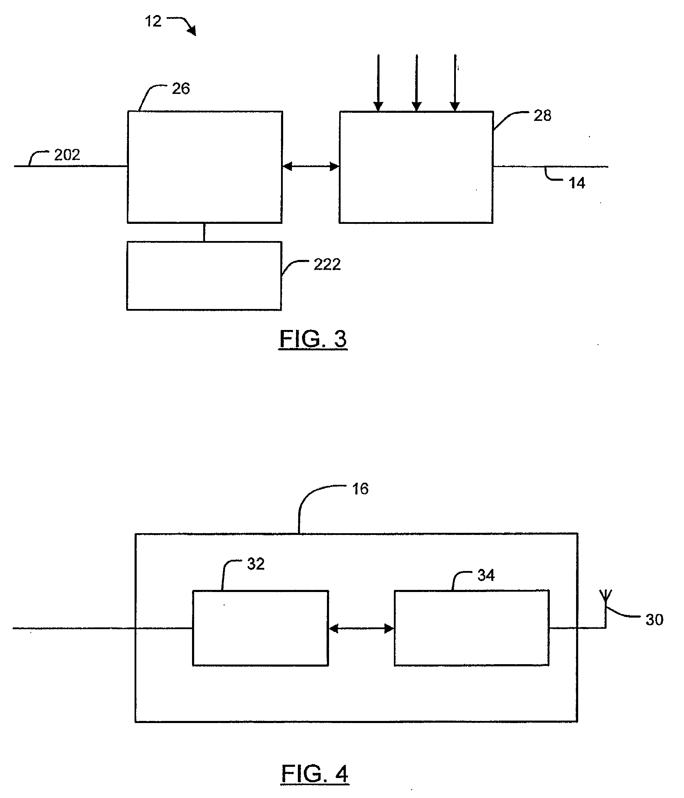

Figure 3 shows the configuration of a distribution hub 12 (which could be hub 12a,b, or c) according to an embodiment of the invention. The distribution hub 12 includes a DOCSIS compliant Cable Modem Termination System ("CMTS"), a hub management system 222 and cable hub transmitter and receiver 28. The CMTS 26 is essentially a data switching system designed to, on the downstream side, receive data from the Internet, via the headend 200, and provide the data switching necessary to route data over a downstream data channel to a group of subscribers in the service area served by the hub 12. The CMTS 26 includes a 64/256 QAM modulator for modulating user data for a group of subscribers onto a 6MHz downstream data channel (which is the bandwidth allocated to a conventional North American CATV channel). Under DOCSIS, each 6MHz downstream channel can accommodate a finite number of subscribers (for example, 500-1000) with an acceptable QoS. In the event that the hub 12 serves more subscribers than can be satisfactorily served with a single 6MHz downstream channel, the hub 12 can include additional CMTS 26 units to support additional downstream and upstream data channels, each of which will have corresponding wireless coverage area 206. On the upstream side, CMTS 26 takes the traffic coming in from a group of customer IP devices on a dedicated upstream channel and routes it through the headend 200 to an Internet Service Provider (ISP) for connection to the Internet 18. The CMTS also includes a QPSK/16 QAM demodulator for demodulating user data from the upstream data channel.

The cable hub transmitter and receiver 28 combines the downstream data channel output from the CMTS 26 with video, audio, pay-per-view, and local programs that are received by television subscribers. The combined signal is transmitted by the hub transmitter and receiver 28 throughout the cable plant 14. The hub transmitter and receiver 28 also receives, through the cable plant 14, signals transmitted from subscriber's IP devices on the upstream channel, and routes the upstream signal to the CMTS 26.

The hub management system 222 includes servers configured to support the operations of hub 12 in providing Internet access to the subscribers' homes 204 and to mobile subscriber units 20 located within the service area of the hub at any given time. In this respect, the hub management system 222 stores information identifying the addresses of the IP devices that it services at any particular time, including the addresses of any mobile subscriber units 20 that are currently located within its corresponding wireless service area 206.

In the preferred embodiment of the invention, the cable plant 14 that is associated with each hub 12 is an existing hybrid fibre coaxial (HFC) cable plant infrastructure that is capable of supporting upstream as well as down stream traffic. The cable plant 14 includes a fibre termination node 15, and a coaxial cable plant 17. The fibre node 15 is connected by a bi-directional fibre link to the distribution hub 12, and converts optical signals from the fibre link into RF signals for transmission over the coaxial plant 17, and vice versa. Although only one fibre node 15 per cable plant 14 is illustrated in Figure 1, each cable plant 14 will generally include a plurality of fibre nodes 15, each having a coaxial cable plant 17 extending therefrom. As illustrated in Figure 1, antenna nodes 16 are connected to taps 36 throughout the coaxial cable plant 17 at various locations, thereby providing a microcellular distributed antenna system in which each antenna node 16 has a predefined nodal coverage area to and from which the node can transmit and receive signals. The combined nodal coverage areas for the antenna nodes served by a common downstream cable data channel define the wireless service areas 206a,b. As noted above, in one preferred embodiment, the same signals are transmitted by a number of antenna nodes 16 in each wireless service area 206a,b substantially simultaneously, such that the group of antenna nodes within a wireless service area function as a single frequency network.

With reference to Figure 4, each bi-directional antenna node 16 includes a cable plant interface 32 and a transceiver 34, which in a preferred embodiment is an OFDM (Orthogonal Frequency Division Multiplexing) transceiver. OFDM modulation is an attractive form of modulation due to its high spectral efficiency and resistance to noise and multipath effects. Each antenna node 16 functions as a coaxial cable/wireless transverter. The cable plant interface 32 and transceiver 34 support both upstream and downstream traffic. For downstream traffic, the cable plant interface 32 receives a DOCSIS compliant stream from the cable plant and outputs a TCP/IP (Transmission Control Protocol/ Internet Protocol) compliant stream, which in turn is converted into an OFDM stream by the OFDM transceiver 34 for broadcast from the antenna 30 to subscriber units 20. For upstream traffic, the OFDM transceiver 34 converts OFDM signals received from subscriber units 20 into TCP/IP compliant signals, which are then converted into DOCSIS compliant upstream signals by the cable plant interface 32 and transmitted through the cable plant 14.

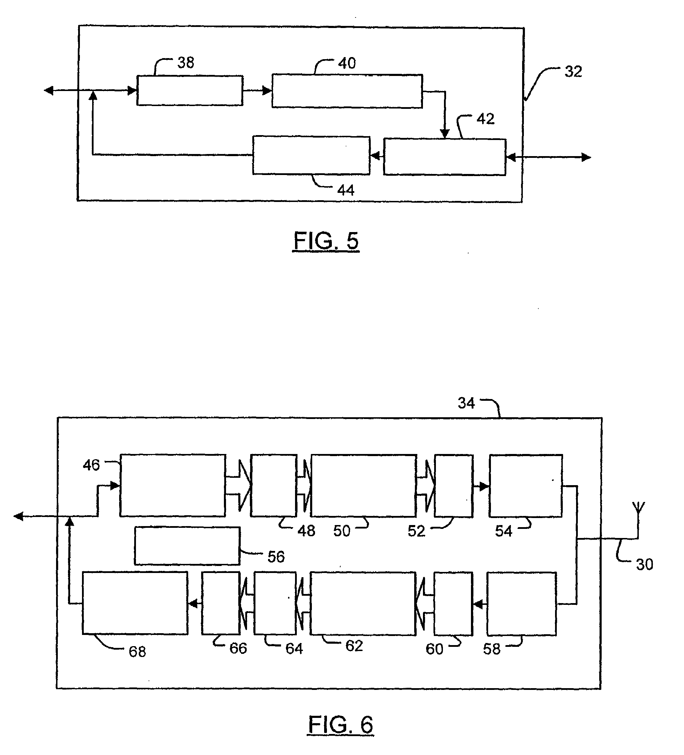

The cable plant interface 32 is substantially a DOCSIS compliant cable modem that is capable of supporting two way communications with multiple users. Figure 5, illustrates an exemplary cable plant interface 32, which includes an RF tuner 38, QAM demodulator 40, controller 42 and a QPSK/QAM modulator 44. The RF tuner 38 selects the dedicated downstream data channel (which under North American DOCSIS will be a 6MHz channel typically in the 50-750 MHz range) and down converts and filters downstream traffic to produce a base band signal. The QAM demodulator 40 converts the base band signal into a digital stream that is provided to controller 42. The controller 42 includes a CPU, which manages the overall operation of the cable modem 32, and preferably an Ethernet controller for converting the digital output of the QAM modulator 40 into a TCP/IP output signal that is 10/100 Base-T Ethernet compliant. The controller 42 has an IP address associated with it, and is able to accept commands from and exchange information with the hub 12, and in particular with the hub management system 222. The controller 42 tracks which mobile subscriber units 20 the antenna node 16 is in communication with, and provides information about such mobile units to the hub management system 222 to facilitate allocation of upstream and downstream resources.
In respect of upstream traffic, the Ethernet controller is configured to receive 10/100 Base-T Ethernet compliant upstream signals from the OFDM transceiver 34. As the cable plant upstream channel is shared among a group of subscribers, the controller 42 is configured to provide DOCSIS compliant Media Access Control (MAC). Under instructions from the controller 42, QPSK/QAM modulator 44 modulates and upconverts the upstream signals to an upstream channel for transmission over the cable plant 14 to the CMTS 26.

A simplified block diagram of an OFDM transceiver 34 is shown in Figure 6. For the purpose of processing downstream data, the transceiver 34 includes a TCP/IP interface 46 that codes TCP/IP signals received from the cable plant interface, maps the coded data to a predetermined constellation, and converts the serial data stream into a number of parallel paths for input to an IFFT 48 where the parallel streams are each assigned a frequency bin and transformed to time domain signals. The output of the IFFT 48 is provided to a cyclic extension unit 50 where a portion of the useful OFDM symbol is copied for replication as a guard interval either at the start or end of the OFDM symbol. As known in the art, cyclic guard intervals are frequently used in OFDM to improve performance in the presence of a multipath channel. The parallel output of the cyclic extension unit 50 is summed together and converted to an analog stream by parallel to serial/digital to analog converter 52. The baseband OFDM symbols output from P/S D/A converter 52 are upconverted, filtered and amplified by transmitter front end equipment 54, and transmitted over-the-air via antenna 30. In a preferred embodiment of the communications system of the present invention, the wireless transmissions sent by the OFDM transceiver 34 are in the MMDS bands (Multichannel Multipoint Distribution Service, ie. 2.1-2.7 GHz microwave band). For example, the downstream channel could use a predetermined frequency allocation of 2680-2686 MHz. Preferably, the TCP/IP interface 46 encodes the digital data provided to the IFFT 48 with known protection codes in order to facilitate data recovery at the subscriber units 20. Thus, coded OFDM (COFDM) is a preferred modulation for the wireless link of the present invention. It will be appreciated that other forms and variations of multi-carrier modulations could be used for the wireless link of the present invention, and in some circumstances single carrier modulation schemes could be used.

As noted above, the antenna nodes 16 act as a single frequency network (SFN) for a selected group of mobile subscribers in a wireless service area 206. In OFDM based systems, it becomes more efficient to use several low power transmitters than using a single high power transmitter. Furthermore, the use of several transmitters greatly reduces the potential of shadowed zones in a service area. As known in the art, each transmitter in an SFN must transmit the same data bits at the same time on the same frequency. In order to synchronize the antenna nodes, each node 16 preferably includes a GPS receiver 56 to provide a frequency and absolute time reference that is used by the OFDM transceiver 34 to establish the working frequency, processing frequency, bit rate and absolute timing required for proper SFN transmission.

In a preferred embodiment of the communications system, the wireless upstream signals are also COFDM signals. For example, in an MMDS system the wireless upstream channel in a particular wireless service area could use a predetermined frequency allocation of 2156-2162 MHz. The wireless upstream bandwidth allocation could be shared among wireless subscriber units 20 by using known time multiplexing schemes, frequency multiplexing, or a combination of both. Upstream resource allocation is controlled by the hub management systems and network management system 210.
In order to process upstream signals received from subscriber units 20, the OFDM transceiver 34 includes a receive processing chain comprising an RF tuner 58, analog to digital/serial to parallel converter 60, cyclic extension remover 62, FFT 64, parallel to serial converter 68 and TCP/IP interface 68. The TCP/IP interface preferably converts the upstream signals into 10/100 T-Base Ethernet compliant signals, which are provided to the cable plant interface 32.

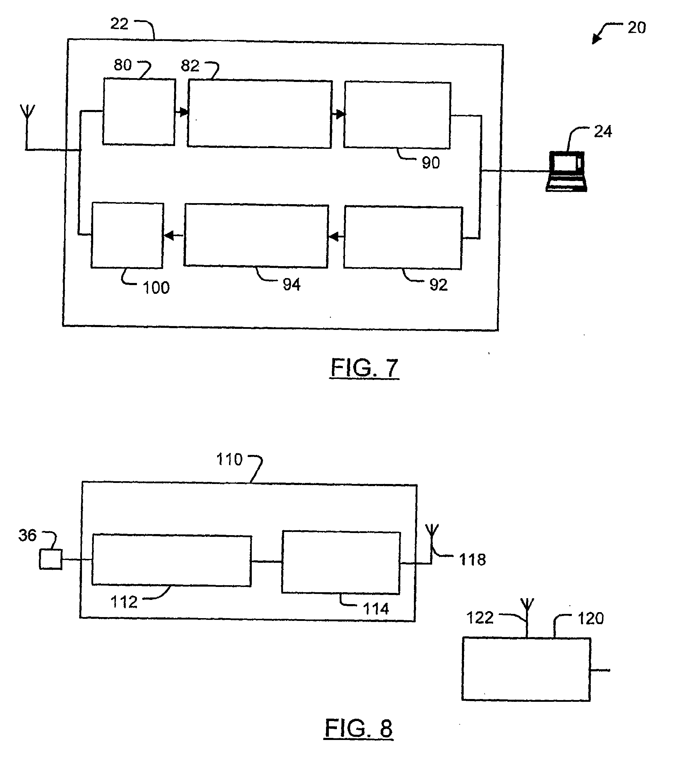

A block diagram representative of a mobile subscriber unit 20 is shown in Figure 7. The mobile subscriber unit 20 includes a OFDM modem 22 for exchanging wireless transmissions with antenna nodes 16. The OFDM modem 22 is connected to an intelligent input/output device, such as a personal computer 24. Conveniently, the interface between the subscriber modem 22 and PC 24 is a 10/100 T-base Ethernet interface. The subscriber modem 22 functions as an OFDM transceiver, and includes a receiver for receiving OFDM symbols broadcast from the plurality of antenna nodes 16 and converting the OFDM symbols into Ethernet compatible TCP/IP signals for input to subscriber PC 24. The receiver includes an RF tuner 80, an OFDM demodulator 82 (which includes an analog to digital and serial to parallel converter, a cyclic extension remover, an FFT, and a parallel to serial converter) and a TCP/IP interface 90. In addition to converting the signals output from OFDM demodulator 82 into error corrected Ethernet compatible signals, the TCP/IP interface 90 also performs a conditional access function such that only downstream information actually addressed to a particular subscriber modem 22 is output by that subscriber modem. The subscriber modem treats the downlink signals from the different antenna nodes as multipath components, thereby increasing the diversity gain.

The subscriber modem 22 also includes a transmitter for relaying signals from the subscriber PC 24 to antenna nodes 16. The transmitter includes a TCP/IP interface 92, an OFDM modulator 94 (which includes an IFFT, a cyclic extension unit, a parallel to serial and digital to analog converter) and conventional transmitter front end components 100. Although the wireless uplink has been described as an OFDM signal, other multi-carrier or single carrier modulation formats could be used for the uplink.

In order to offer a further understanding of the communications system of the present invention, an overview of an example of its operation will now be discussed with reference to Figures 1 to 7. Upstream communications from wireless units 20 to the Internet 18 will be considered first. At any given time a plurality of wireless subscriber units 20 are active within the wireless services areas 206a, 206b. As noted above, the allocated wireless upstream spectrum within a wireless service area could be shared by the subscriber units 20 using frequency division multiplexing, time division multiplexing, or a combination of both. (US patents 5,828,660 and 5,802,044, issued October 27, 1998 and September 1, 1998, respectively, to Baum et al. show examples of frequency division multiplexing in the OFDM upstream environment). Preferably, wireless upstream communications are frequency separated between adjacent wireless service areas 206a, 206b, with frequency reuse occurring in spatially separated wireless service areas. With reference to wireless coverage area 206a, when a particular subscriber unit 20 successfully transmits a signal (for example a request to download a file from a particular server connected to the Internet), the signal will be received by one or more of the antenna nodes 16 servicing the area 206a. At each antenna node 16 receiving the signal, OFDM transceiver 34 converts the signals to Ethernet TCP/IP compatible format and the converted signals are provided to the cable plant interface 32 for conversion to DOCSIS compatible format for transmission over the cable plant 14 to hub 12a. In one embodiment of the invention, each of the antenna nodes 16 sends the received subscriber signal over the cable plant 14 (using DOCSIS MAC to allocate upstream resources, with each antenna node 16 being treated as a multi-user cable modem) to the hub 12a, and the hub management system 222 is configured to identify and discard duplicate transmissions from different antenna nodes to avoid relaying the duplicate requests to the headend 200. Alternatively, in order to preserve upstream bandwidth in the cable plant 14, the communications system 10 could be configured so that only one of the antenna nodes 16 actually sends the request signals over the cable plant 14 to the hub 12a. In such systems, the antenna nodes 16 could measure the strength of signals received from mobile subscriber units 20 and relay the measured signal strength information to the hub management system, which would then instruct only one of the nodes 16 to transmit the full upstream signal to the hub 12a. A combination of the two methods noted above could also be used - for example, for short messages from a subscriber unit 20, all antenna nodes 16 receiving the message could relay it to the hub 12a, which would then relay only one copy of the message to the headend 200 for routing to the Internet. For longer messages (such as email), the nodes 16 could ask the hub 12a to select one node 16 to transmit the full message over the cable plant 14 to the hub12a, which would then transmit that message to the headend 200 for routing to the Internet.

The hubs 12a, 12b and 12c each transfer location information (which may be based on signal strength information) regarding the subscriber units 20 within their respective coverage areas to the network management system 210 at headend 200. The headend network management system 210 uses such information to track the location of the mobile subscriber units 20, allocate wireless and cable plant upstream and downstream spectral resources accordingly, and coordinate handoffs when the mobile subscriber units pass from one wireless service area to another. In one embodiment, the system uses dynamic IP routing in that each hub acts as a router to a subnet containing a subject subscriber unit; the route to that subnet, maintained by the headend, dynamically changes when the subject subscriber unit moves to a different wireless service area.

With respect to downstream traffic, the headend 200 receives, typically through a backbone network, TCP/IP data from the Internet 18 that is addressed to the specific Internet devices that are serviced by the communications system 10. Based on stored address tables, the network management system 210 directs the IP router 208 to route the data to the appropriate hubs 12a-c. For mobile subscriber units 20, the network management system 210 dynamically maintains the address tables to associate each mobile unit 20 with the hub12a-c whose service area it is currently located in. Using the hub 12a as an example, the headend 200 routes data from the Internet that is addressed to a group of subscribers (including devices at subscriber homes 204 and mobile subscriber units 20) within coverage area 206a to the hub 12a. At the hub12a, the signals addressed to the group of subscribers are 64 QAM or256 QAM modulated into a 6MHz downstream data channel at CMTS 26, merged with other downstream channels (such as CATV video channels) at the hub transmitter and receiver 28, and broadcast over the HFC cable plant 14 to all subscriber homes 204 and antenna nodes 16 connected to the plant. The antenna nodes 16 covert the signals on the data channel to OFDM wireless signals for simulcast transmission to subscriber units 20, each of which is configured to convert only the signals that are specifically addressed to it into a format usable by its PC 24. Preferably, in order to conserve wireless bandwidth, the antenna nodes 16 are configured to only transmit signals addressed to mobile subscriber units 20, and to ignore signals on the cable plant 14 that are addressed to subscriber homes 204.

As described above, all antenna nodes 16 receiving downstream signals from a single downstream data channel broadcast in a simulcast manner within a wireless service area 206. However, the hubs 12a-c and their associated antenna nodes 16 could alternatively be configured so that each antenna node 16, or sub-groups of antenna nodes, within a service area 206 broadcast downstream signals to subscriber units that were located within a predefined proximity of such node or sub-group of nodes. In such a system, the wireless service areas 206 would be broken down into sub-areas. The example of the wireless link of the communications system 10 described above is based on frequency division duplexing in the MMDS bands. However, time division duplexing to separate upstream and downstream wireless communications could alternatively be used. Furthermore, different frequency bands other than MMDS could be used, for example UHF.

It will thus be appreciated that the communications system 10 uses antenna nodes placed throughout existing CATV infrastructure to provide bi-directional transfer of IP traffic over a combined wired/wireless communications path, thus permitting cable companies to implement cost effective wireless Internet services to mobile users and to stationary users who do not have a wired connection to the cable plant. The use of OFDM provides a robust wireless link that is resistant to multipath effects. Although the above description has described certain management functions as being performed at the headend, and other management functions as being performed at the distribution hubs, it will be appreciated that a number of the functions described as being performed at one location (for example, at the headend) could instead be performed at a different location (for example at a hub).

In a further preferred embodiment of the invention, cable to wireless television transverters are distributed throughout the cable plant 14 in order to provide delivery of television signals to mobile receivers and stationary receivers at locations that do not have a wired connection to the cable plant. The television transverters could be integrated into antenna nodes 16, or could be attached to taps 36 at other locations of the coaxial plant 17 as stand alone transmitters. Figure 8 shows a block diagram of a preferred embodiment of a cable to wireless television transverter 110, which includes a downconverter/ demodulator 112, an OFDM modulator 114 and a transmit antenna 118. The demodulator 112 is connected to coaxial cable plant via a tap 36 to receive television signals from the hub transmitter and receiver 28. In one preferred embodiment, the television signals transmitted from the distribution hub 12 are QAM encoded digital MPEG 1,2 or 3 compliant signals and the demodulator 112 is a QAM demodulator that converts the television signals on the cable plant to baseband MPEG signals, which are input to COFDM Modulator 114. COFDM modulator 114 remodulates the television signals into and OFDM format, up-converts and amplifies the OFDM symbols, and transmits them over the air via antenna 118. In a preferred embodiment, the COFDM modulator 114 is a DVB-T (Digital Video Broadcast-Terrestrial, as specified by European Telecommunications Standards Institute in publication No. ETSI EN 300 744 v1.2.1) compliant device, using 6MHz channelling, although it will be appreciated that other suitable OFDM formats could be used. Preferably, all of the transverters 110 connected to a common cable plant function as a single frequency network and are synchronized to simultaneously transmit the same signals on the same frequency. As known in the art, single frequency network operation is an option that is provided for by the DVB-T protocol.

Figure 8 also shows an exemplary mobile OFDM subscriber television receiver 120 for receiving signals from the transverters 110. The receiver 120 is preferably a DVB-T compatible receiver that converts incoming OFDM TV signals back into the same format that the signals were in prior to being taken off of the coaxial cable 17 so that the TV signals can be supplied to a television receiver.

In a further preferred embodiment of the invention, the cable to wireless transverter 110 is configured to convert conventional analog television signals (such as NTSC signals) into OFDM signals, with subscriber receiver 120 converting the received OFDM signals back into conventional analog television signals. In such an embodiment, demodulator 112 preferably includes an analog to digital and MPEG 2 encoder for digitally encoding the television signals. Similarly, the subscriber receiver would include a decoder for converting the MPEG 2 signals back into NTSC format. Although the modulator 114 of the cable/wireless transverter 110 has been described in the two examples noted above as a multi-carrier modulator, a single carrier modulator such as an 8-VSB modulator could alternatively be used, in which case the subscriber receiver 120 would include a corresponding single carrier receiver, such as an 8-VSB receiver.

While the invention has been described in terms of various specific embodiments, those skilled in the art will recognize that the invention can be practiced with modification within the spirit and scope of the claims.

## Claims

1. A communications system (10) for providing wireless Internet signals to a group of mobile subscribers (20), including:
a distribution hub (12) for receiving Internet signals for a plurality of subscribers (20) from the Internet (18), and a plurality of video signals from a source, and transmitting the Internet and video signals over a wired cable TV plant (14);
a plurality of antenna nodes (16) coupled to the distribution hub (12) by the cable plant, each of the antenna nodes (16) including a cable plant interface (32) adapted to receive the Internet signals via the cable TV plant (14), and a multi-carrier modulator (34) adapted to modulate the Internet signals onto multiple carriers for wireless transmission to the plurality of subscribers (20).

2. A communications system (10) according to claim 1 **characterized in that** the multi-carrier modulator (34) includes an orthogonal frequency division multiplexer, the multi-carrier modulated Internet signals being orthogonal frequency division multiplexed (OFDM) signals.

3. A communications system (10) according to claim 2 **characterized in that** the Internet signals transmitted over the wired cable TV plant (14) are QAM modulated signals placed on RF carrier frequencies falling substantially within the 50-750 MHz range.

4. A communications system (10) according to claim 3 **characterized in that** the OFDM symbols are modulated onto RF carrier frequencies falling substantially within the 2500 - 2700 MHz range.

5. A communications system (10) according to claim 1 or 2 **characterized in that** at least some of the antenna nodes (16) are configured to transmit the same signals at the same time on the same frequencies in overlapping coverage areas (206a, 206b).

6. A communications system (10) according to any one of claims 1 to 5 **characterized in that** the antenna nodes (16) are configured to receive wireless signals from a plurality of subscribers (20) and relay the subscriber signals over the cable plant to the distribution hub (12), the distribution hub (12) being configured to receive the subscriber signals from the cable plant and transmit them to the Internet (18).

7. A communications system (10) according to any one of claims 1 to 6 **characterized in that** the wired cable plant includes a coaxial cable portion (17).

8. A communications system (10) according to claim 7 **characterized in that** the antenna nodes (16) are connected to the coaxial cable portion (17).

9. A communications system (10) according to any one of claims 1 to 8 including a plurality of cable plant to wireless transverters (110) coupled to the distribution hub (12) by the cable plant, each of the wireless transverters (110) being configured to receive video signals from the cable plant and convert the received video signals into multi-carrier modulated signals for wireless transmission to subscribers (20).

10. A communications system (10) for broadcasting television signals to a group of mobile subscribers (20), including;
a distribution hub (12) configured to receive television signals from a network and transmit the subscriber signals over a cable plant (14);
a cable plant (14) connected to the distribution hub (12) for transmitting the television signals from the distribution hub (12) to a plurality of remote locations, the cable plant (14) including at least one coaxial cable network (17);
a plurality of cable/wireless television transverters (110) connected at remote locations to the coaxial cable network (17), the transverters (110) being configured to receive television signals transmitted over the cable plant (14) from the distribution hub (12), convert the television signals into a format suitable for wireless transmission, and transmit the converted television signals over wireless paths to a plurality of mobile subscriber units (120); and
a plurality of mobile subscriber units (120) configured to receive the converted television signals.

11. A communications system (10) according to claim 10 **characterized in that** the converted television signals include OFDM television signals.

12. A communications system (10) according to claim 11 **characterized in that** at least some of the plurality of transverters broadcast the same signals at the same time on the same frequencies in overlapping coverage areas.

13. A communications system (10) according to claim 10 **characterized in that** the converted television signals include 8-VSB television signals.

14. A communications system (10) for providing wireless signals from a network (18) to a group of mobile subscribers (20), including:
(a) a distribution hub (12) for (i) receiving, from the network (18), downstream IP signals for a plurality of mobile subscriber units (20) located within a service area (20a,20b) and broadcasting the downstream IP signals in a downstream channel over a wired cable TV plant (14), and (ii) receiving over the wired cable TV plant (14), from a plurality of antenna nodes (16), upstream IP signals and routing the upstream IP signals to the network (18);
(b) a plurality of antenna nodes (16) located in the service area (206a.206b) and coupled to the distribution hub (12) by the cable plant for (i) receiving the downstream IP signals from the wired cable TV plant (14), converting the downstream IP signals into a format suitable for wireless transmission and transmitting the converted downstream IP signals over-the-air to the mobile subscriber units (20), at least some of the antenna nodes (16) acting in simulcast manner; and (ii) receiving upstream IP signals over-the-air from the mobile subscriber units (20), converting the upstream IP signals into a format suitable for transmission over the cable TV plant (14) and transmitting the upstream IP signals over the cable TV plant (14) to the distribution hub (12); and
(c) a plurality of mobile subscriber units (20) each having a wireless receiver for receiving over-the-air downstream IP signals transmitted from the antenna nodes (16) and a wireless transmitter for transmitting upstream IP signals to the antenna nodes (16)..

15. The communications system (10) of claim 14 including a plurality of said distribution hubs (12), each having associated therewith a service area (206a, 206b) and a plurality of antenna nodes (16) for transmitting downstream IP signals to and receiving upstream IP signals from mobile subscriber units (20) located within the service area, the communications system (10) further including a headend (200) coupled to said distribution hubs (12) for routing downstream IP signals from the network to the distributions hubs, the headend (200) including a router (208) and a network management system (210) configured to receive information from the about the location of mobile subscriber units and to route downstream IP signals addressed to a particular mobile subscriber unit (20) to the distribution hub (12) associated with the service area (206a,206b) in which the particular mobile subscriber unit (20) is located.

16. A method for providing wireless Internet signals to a group of mobile subscriber units, including:
(a) providing downstream Internet signals addressed for a plurality of mobile subscriber units (20) to a distribution hub (12);
(b) formatting the Internet signals into a transmission format suitable for transmission over a wired cable television network (14) and transmitting the formatted Internet signals over the cable television network (14) to a plurality of antenna nodes (16) connected throughout the wired cable television network (14); and
(c) at the antenna nodes (16), converting the formatted Internet signals into multi-carrier modulated signals and transmitting the multi-carrier modulated signals over-the- air to the plurality of subscriber units (20).

17. The method of claim 16 **characterized in that** the multi-carrier modulated signals are OFDM signals, the formatted Internet signals are QAM modulated signals placed on RF carrier frequencies falling substantially within the 50-750 MHz range and the OFDM signals are modulated onto RF carrier frequencies falling substantially within the 2500-2700 MHz range.

18. The method of claim 17 **characterized in that** at least some of the antenna nodes (16) broadcast the same OFDM signals at the same time on the same frequencies in overlapping coverage areas (206a,206b).
